# EUROPÄISCHE PATENTSCHRIFT

(11) **EP 3 737 875 B1**
(45) Veröffentlichungstag und Bekanntmachung des Hinweises auf die Patenterteilung: **26.01.2022**
(21) Anmeldenummer: 18795326.0
(22) Anmeldetag: 18.10.2018
(51) Int. Cl.: F16F 13/14, B61F 15/20

(54) **HYDRAULISCHE LAGERBUCHSE**
HYDRAULIC BEARING BUSH
COUSSINET DE PALIER HYDRAULIQUE

(30) Priorität: 11.01.2018 DE 102018200344
(43) Veröffentlichungstag der Anmeldung: 18.11.2020
(73) Patentinhaber: ContiTech Luftfedersysteme GmbH, 30165 Hannover (DE)
(72) Erfinder: GROTSCH, Sara, 30419 Hannover (DE); SANZ, Andre, 30419 Hannover (DE)
(74) Vertreter: Continental Corporation
(86) Internationale Anmeldenummer: PCT/EP2018/078474
(87) Internationale Veröffentlichungsnummer: WO 2019/137646

(56) Entgegenhaltungen:
- WO-A1-2015/139857
- JP-A- S 629 039
- JP-A- S62 184 250
- US-A- 4 753 421

## Beschreibung

Die Erfindung betrifft eine hydraulische Lagerbuchse, insbesondere für Schienenfahrwerke, wobei die hydraulische Lagerbuchse folgende Merkmale aufweist:
- eine innere Buchse zur Aufnahme eines Lagerzapfens,
- einen ringförmigen Gummikörper, der die innere Buchse im Wesentlichen umfasst und über ihren äußeren Umfang mit ihr verbundenen ist, vorzugsweise über ihren Umfang anvulkanisiert ist, sowie
- zwei an beiden axialen Enden des Gummikörpers anvulkanisierte ringförmige Stützringe, vorzugsweise aus Metall
- ein äußeres ringförmiges Gehäuse, an dessen Innenumfang die Stützringe abgestützt sind, vorzugsweise an den beiden axialen Enden des äußeren ringförmigen Gehäuses, sowie
- mindestens zwei in Umfangsrichtung zwischen dem ringförmigen Gummikörper und dem ringförmigen Gehäuse ausgebildete, jeweils über Teilbereiche des Umfangs sich erstreckende und mit einer Hydraulikflüssigkeit befüllbare Kammern,
wobei die Kammern über mindestens einen Ausgleichs- und Drosselkanal miteinander verbunden sind.

Derartige hydraulische Lagerbuchsen zur Beeinflussung und/oder Einstellung des Dämpfungsverhaltens von Lagern an Fahrzeugen, insbesondere Schienenfahrzeugen, sind bereits in unterschiedlichen Ausführungen bekannt. Solche auch als Radsatzführungsbuchsen bezeichnete Lagerbuchsen werden zur elastischen Lagerung von beweglichen Teilen wie etwa den Teilen eines Laufwerks eines Fahrzeugs, insbesondere eines Schienenfahrzeugs eingesetzt.

In der Regel besteht ein solches Gummi-Metall-Lager aus einem innen liegenden Gummimetallelement, welches in einer metallenen Hülse aufgenommen ist. Die äußere metallene Hülse ist zum Beispiel mit der Karosserie des Fahrzeugs verbunden, während das innen liegende Gummimetallelement einen Zapfen aufnimmt, der zu einem Teil des Fahrwerks gehört.

Zwischen dem elastomeren Teil/ Gummiteil des Gummimetallelements und der metallenen Hülse als Gehäuseelement sind über Teilbereiche des Umfangs sich erstreckende und mit einem Hydraulikfluid/einer Hydraulikflüssigkeit befüllbare Kammern angeordnet, oft nierenförmig ausgebildet über einen Teilumfang des Lagers. Diese befüllbaren Kammern sind untereinander oder mit einer Ausgleichskammer durch mindestens einen Verbindungskanal verbunden.

Bei Belastung der hydraulischen Buchse wird durch das Einfedern des Gummiteils eine Kammer verkleinert, so dass ein Teil der Hydraulikflüssigkeit in der Kammer durch den Verbindungskanal in die andere Kammer oder in die Ausgleichskammer strömt. Der Verbindungskanal wirkt dann als hydraulische Drossel, nämlich als Drosselkanal. Das Durchströmen des entsprechend ausgebildeten Drosselkanals erzeugt Dissipation und somit Dämpfungsarbeit.

Eine hydraulische Flüssigkeit wird somit in zumindest teilweise von dem gummielastischen Material umgebenen, etwa diametral gegenüberliegend angeordneten Kammern zum Bereitstellen weiterer schwingungsabsorbierender Eigenschaften bereitgestellt. Dabei dient der Verbindungskanal mit seiner Drosseleigenschaft als Schwingungstilger oder zum Bereitstellen einer dynamischen Steifigkeit in entsprechender Belastungsrichtung dient.

Die Dämpfungseigenschaften solcher hydraulischen Buchsen sind aufgrund ihrer Bauweise frequenzabhängig. Üblicherweise werden niederfrequente Schwingungen, also Schwingungen mit Frequenzen unterhalb von ca. 2 Hz, die im allgemeinen mit Amplituden von ca. 10 mm auftreten, stark gedämpft, während hochfrequente Schwingungen, also Schwingungen im Frequenzbereich oberhalb des genannten Wertes, aufgrund der Trägheit und Inkompressibilität der Hydraulikflüssigkeit und der Gummifeder nahezu ungedämpft durchgehen. Diese Eigenschaften macht man sich dadurch zu Nutze, dass durch die Ausgestaltung des Verbindungskanals die Dämpfung und die Steifigkeit frequenzabhängig eingestellt werden.

Das auf einem Schwingungsverhalten einer hydraulischen Flüssigkeitssäule beruhende elastische Verhalten kann dabei hinsichtlich der Steifigkeit und Dämpfung über die Länge des Verbindungskanals eingestellt werden. Bei einem langen Überlaufkanal können von der Buchse ausgehende Kräfte über die Hydraulikflüssigkeit und über den Überlaufkanal von einer in die andere Kammer nur dann hinreichend gut geleitet werden, wenn der zeitliche Abstand der Stöße bzw. Schwingungen groß, d.h. die Frequenz der Schwingungen klein ist. Erfolgen die mechanischen Belastungen dagegen mit einer hohen Frequenz, so kann aufgrund der Trägheit und Inkompressibilität der Hydraulikflüssigkeit, des zur Verfügung stehenden Kanalquerschnitts und der Kanallänge der Verbindungs- oder Überlaufkanal nicht schnell genug zwischen zwei aufeinanderfolgenden Stößen durchströmt bzw. überwunden werden, um durch einen Überlauf der belasteten Kammer zur unbelasteten Kammer eine Elastizität bereitzustellen.

Diesen Effekt macht man sich zunutze, um beispielsweise bei Schienenfahrzeugen bei schneller Fahrt und damit bei einer kurzen Abfolge von Unebenheiten auf der Schiene und dadurch auftretende mechanische Stöße eine größere Steifigkeit bereitzustellen. Dadurch wird die Fahrsicherheit bei hohen Geschwindigkeiten durch eine harte Lagerung und damit eine Vermeidung einer zu großen Weichheit gewährleistet.

Bei geringen Geschwindigkeiten, das heißt bei einer Kurvenfahrt und dergleichen ist dagegen eine geringe Steifigkeit von Vorteil und die entsprechende Weichheit wird dadurch erreicht, dass die entsprechende Hydraulikfluidsäule zwischen zwei aufeinander folgenden Stößen von einer Kammer in die andere Kammer überführt werden kann. Die Grenzfrequenz, die das steife Verhalten von dem dämpfenden Verhalten mit einer weichen Lagerung abgrenzt, wird durch die Kanallänge derart gegeben, dass je länger der Überlaufkanal ist, umso kleiner ist die Grenzfrequenz oberhalb der eine steife Lagerung mit einer harten Buchse zu beobachten ist.

Im Stand der Technik sind also hydraulische Radsatzführungsbuchsen bekannt, die aus einem Metall-Gummi-Körper zur Realisierung der statischen Steifigkeiten und zwei integrierten Kammern mit Verbindungskanal bestehen. Durch diesen definierten Verbindungskanal wird Fluid ausgetauscht und es ergibt sich eine unter verschiedenen Frequenzen veränderte dynamische Steifigkeit etwa in Fahrtrichtung. Der aktuelle Stand der Technik beschreibt eine hydraulische Radsatzführungsbuchse, bestehend aus einem Metall-Gummi-Körper zur Realisierung der statischen Steifigkeiten und zwei integrierten Kammern mit Verbindungskanal. Durch diesen definierten Verbindungskanal wird Fluid ausgetauscht und es ergibt sich eine je nach Belieben unter verschiedenen Frequenzen veränderte dynamische Steifigkeiten in Fahrtrichtung.

Aus der DE 103 10 633 A1 ist eine Buchse für ein Lager zur elastischen Verbindung von Teilen eines Laufwerks beschrieben. Die insbesondere für Schienenfahrzeuge bestimmte Buchse weist ein inneres Gehäuse auf, um das zur Bildung eines Ringspaltes radial beabstandet ein äußeres Gehäuse vorgesehen ist. In dem Ringspalt befindet sich ein gummielastisches Element, das zwei diametral gegenüberliegende Kammern begrenzt, die mit einer hydraulischen Flüssigkeit gefüllt sind und über einen als Schwingungstilger ausgebildeten Überlaufkanal miteinander verbunden sind. Der Überlaufkanal kann dabei wendelförmig ausgeführt sein und am Außen- und/oder Innenumfang der Buchse bzw. ihrer Gehäuseteile entlanggeführt sein, läuft aber mindestens teilweise entweder durch das Innenteil oder Außenteil des Lagers.

Eine bevorzugte Ausführung der Buchse zeichnet sich dadurch aus, dass der Überlaufkanal zwischen einer Innenwandung des inneren Gehäuseteils und einer etwa wendelförmig in einen Außenbereich eines von der Buchse umschlossenen bolzenförmigen Elements eingebrachten Nut gebildet wird. Das Einbringen von Nuten an der Außenflächen des Lagerbolzens, wie hier das Einbringen einer umlaufenden Nut an einem Lenkerbolzen eines Achslenkers, ist aufwendig und verschiebt die Funktion bzw. die Konstruktion des Lagers teilweise in die Ausbildung des Achslenkers. Hierdurch ist ein Austausch oder Ersatz des Lagers nur mit erhöhtem Aufwand möglich.

JPS62184250 offenbart eine solche Buchse mit einem separaten, rohrförmigen Leitungselement.

Der Erfindung stellt sich daher die Aufgabe, die gattungsgemäße Lagerbuchse so zu gestalten, dass ein dynamisches Steifigkeitsverhalten durch eine Veränderung der Länge des Verbindungskanals auf einfache Weise vorgegeben werden kann. Die hydraulische Lagerbuchse soll dabei im niedrigen Frequenzbereich weiche Steifigkeiten und bei definierten höheren Frequenzen hohe Steifigkeiten in Fahrtrichtung realisieren, eine günstige Fertigung durch Vermeidung von Kerbwirkung bei kraftführenden Bauteilen erreichen und dadurch den Einsatz günstiger Materialien, einfache Gestaltungen und einfache Fertigungsverfahren erlauben. Die hydraulische Radsatzführungsbuchse soll weiche Steifigkeiten bei niedriger Frequenz und hohe Steifigkeiten bei höheren Frequenzen in Fahrtrichtung realisieren.

Gelöst wird die Aufgabe durch die Merkmale des Hauptanspruchs. Vorteilhafte Weiterbildungen sind in den Unteransprüchen enthalten. Ebenfalls offenbart die Erfindung ein besonderes Herstellverfahren sowie eine besondere Verwendung der hydraulischen Lagerbuchse.

Dabei weist die innere Buchse einen vorzugsweise umlaufenden Hohlraum auf und der Ausgleichs- und Drosselkanal ist im Wesentlichen durch mindestens ein in diesem Hohlraum angeordnetes separates, rohrförmiges Leitungselement gebildet, vorzugsweise durch mindestens einen in diesem Hohlraum angeordneten flexiblen Schlauch. Verwendbar wäre hier beispielsweise ein Gummischlauch oder ein Schlauch aus Polyethylenterephtalat, Polyurethan oder anderen Elastomeren bzw. Polymeren. Auch wäre der Einsatz anderer Materialien wie NE Metall oder Metall, aber auch anderes biegsames Material für den Schlauch/das Leitungselement denkbar.

Durch die erfindungsgemäße Konstruktion eines so als separates, rohrförmiges Leitungselement oder flexibler Schlauch ausgebildeten Verbindungskanals sind sehr einfache Variantenausführungen für variable statische und dynamische Steifigkeiten möglich, da sich abhängig vom Durchmesser des Rohrleitungselementes bzw. Schlauch unterschiedliche Windungszahlen und Längen des Drosselkanals einfach realisieren lassen und man so den Ausgleichs-oder Drosselkanal individuell für jeden Anwendungsfall anpassen kann. Auch kann hier leicht ein "Gleichteile-Prinzip" aufgebaut werden, indem beispielsweise die innere Buchse mit ihrem Hohlraum für verschiedene Lager gleich ausgebildet ist, während der Drosselkanal durch entsprechend variable Einlage eines Schlauches bereitgestellt wird. Schläuche sind Meterware und können daher ohne weiteres in jeder Länge und Abmessung eingesetzt werden. Dies ermöglicht auch sehr einfache Variantenausführungen für variable statische und dynamische Steifigkeiten.

Eine vorteilhafte Weiterbildung besteht darin, dass der Hohlraum durch eine auf der Innenseite der inneren Buchse umlaufende Kavität gebildet wird, welche radial innen durch die Außenoberfläche bzw. Außenwandung des Lagerzapfens begrenzt wird. Eine solche Kavität lässt sich leicht herstellen und kann bei metallischen Buchen in einfachster Weise durch realisiert werden, dass eine nach radial innen gerichtete im Wesentlichen U-förmige Walzung oder Umformung durchgeführt wird, so dass zwischen den nach innen gerichteten Schenkeln des "U" der erfindungsgemäße Hohlraum entsteht.

Eine weitere vorteilhafte Ausbildung besteht darin, dass die innere Buchse aus mindestens zwei koaxial ineinandergefügten hohlzylindrischen Körpern besteht und der Hohlraum durch mindestens eine vorzugsweise umlaufende Ausnehmung mindestens eines der hohlzylindrischen Körper auf der dem jeweils anderen hohlzylindrischen Körper zugewandten Oberfläche ausgebildet ist. Auch hier ist die Herstellung einer solchen inneren Buchse relativ einfach, da hier die hohlzylindrischen Körper vor dem Ineinanderfügen entsprechend bearbeitet werden können und nach dem Ineinanderfügen den entsprechenden Hohlraum ausbilden. Einer der hohlzylindrischen Körper kann dabei mit Ausnehmungen versehen sein, so dass nachträglich durch diese Ausnehmungen der den Drosselkanal bildende Schlauch eingefügt werden kann.

Eine weitere vorteilhafte Ausbildung besteht darin, dass der Hohlraum umlaufend ausgebildet ist und das separate, rohrförmiges Leitungselement bzw. der flexible Schlauch schraubenförmig oder spiralförmig innerhalb des Hohlraums verläuft. Hierdurch ist die Länge des Kanals im weiten Rahmen anpassbar und damit auch die Dämpfung. Der Verbindungskanal bzw. der Sachlauch oder das Rohrleitungselement kann etwa als ebene Schraube oder in Form einer ineinander gedrehten Mehrfachschraube in den Hohlraum eingelegt werden. Dies erlaubt ebenso ein Platz sparende Anordnung des Verbindungskanals. Es können so z. B. die jeweiligen Enden des Kanalsystems mit den zwei gegenüberliegenden Kammern durch zwei oder mehrere Kanäle verbunden werden.

Eine weitere vorteilhafte Ausbildung besteht darin, dass sowohl die innere Buchse als auch der ringförmige Gummikörper bereits vorgefertigte Durchgänge oder Kanäle zur Verbindung der Enden des im Hohlraum befindlichen rohrförmigen Leitungselements bzw.

Schlauchs und der jeweiligen befüllbaren Kammer aufweist. Dies erleichtert den schnellen Einbau bzw. einen einfachen Austausch des Ausgleichs- und Drosselkanals. In aller Regel sind hier an den Enden des Kanalsystems, d.h. des Rohrleitungselementes oder Schlauch Verschraubungen, Vercrimpungen oder Quetschverbindungen vorhanden, je nach Druckhöhe.

Besonders geeignet zur Herstellung einer erfindungsgemäßen hydraulischen Lagerbuchse, bei der die innere Buchse beispielsweise aus einem metallischen Sintermaterial oder aus Kunststoff besteht, dass die innere Buchse mit dem Hohlraum für das rohrförmige Leitungselement bzw. den Schlauch durch ein 3-D-Druckverfahren erzeugt wird. Damit lassen sich auch sämtliche komplizierten Hohlraumformen herstellen, etwa auch solche mit hinterschnittenen Profilen.

In besonderer Weise vorteilhaft ist, wie bereits dargelegt, die Anwendung der erfindungsgemäßen hydraulischen Lagerbuchse als Radsatzführungsbuchse innerhalb eines Fahrwerks für ein Schienenfahrzeug. Hier ergibt sich bei einem Bauteil mit sehr geringen Abmessungen die Möglichkeit einer hohen Beeinflussung der Steifigkeit abhängig von der Frequenz der einwirkenden Belastungen/Kräfte.

Weitere Vorteile ergeben sich durch eine hier sehr einfache Möglichkeit der Modifikation der nierenförmigen Kammern und im Verhältnis zum Gummimetallteil bzw. zur Gummipolstergeometrie. Ebenfalls erreicht man eine einfache Variation der dynamischen Steifigkeit und Steifigkeitsverhältnis Cₓ statisch zu Cₓ dynamisch. Je nach geforderten dynamischen Steifigkeiten sind mehrere Kanallagen, Kanalquerschnitte und verschiedene Kanallängen im Kanalsystem möglich. Der Einsatz von Materialien wie Aluminium oder Kunststoff ist möglich.

Zudem sind unterschiedlichen Flüssigkeiten mit unterschiedlichen Zähigkeiten / Viskositäten einsetzbar. Aufgrund von Temperaturunempfindlichkeit findet aktuell Glykol Anwendung. Die erfindungsgemäße Ausbildung erlaubt auch eine einfache, kostengünstige und dennoch prozesssichere Montage.

Bei der erfindungsgemäßen hydraulischen Lagerbuchse kann eine Variation der statischen Steifigkeit durch Modifikation der Nieren, d.h. der befüllbaren hydraulischen Kammern und der Gummipolstergeometrie erfolgen. Je nach geforderten dynamischen Steifigkeiten sind unterschiedliche Kanalquerschnitte und verschiedene Kanallängen im Kanalsystem möglich. Des Weiteren ist die Verwendung verschiedener hydraulische Flüssigkeiten mit unterschiedlichen Viskositäten bei definierten Temperaturen möglich. Die Befüllung ist durch eine geeignete Befüllbohrung mittels einer Befüllvorrichtung, evtl. auch unter Vakuumerzeugung möglich.

Anhand eines Ausführungsbeispiels soll die Erfindung näher erläutert werden.

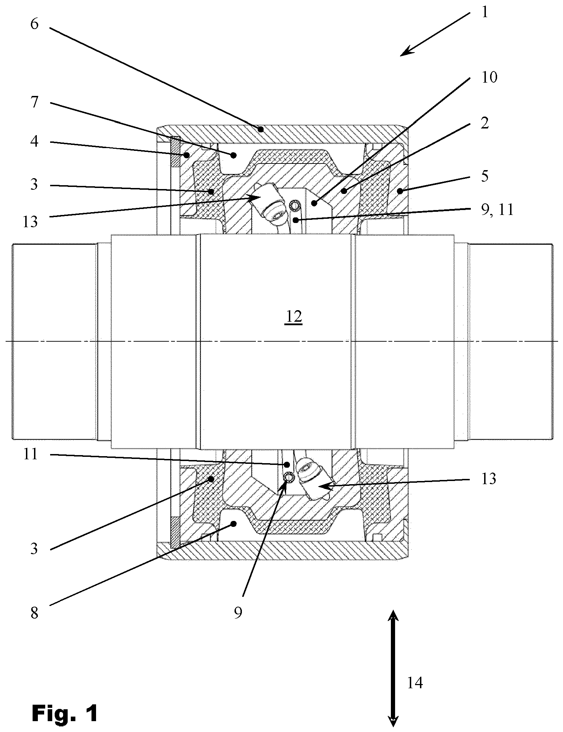

Fig. 1 zeigt prinzipiell eine hydraulische Lagerbuchse 1 für ein hier nicht näher dargestelltes Schienenfahrwerk. Die hydraulische Lagerbuchse weist eine innere Buchse 2 zur Aufnahme eines Lagerzapfens 12 auf, ebenso einen ringförmigen Gummikörper 3, der die innere Buchse 2 im Wesentlichen umfasst und über ihren äußeren Umfang mit ihr durch Vulkanisation verbundenen ist, sowie zwei an beiden axialen Enden des Gummikörpers anvulkanisierte ringförmige, metallische Stützringe 4 und 5.

Die hydraulische Lagerbuchse weist weiterhin ein äußeres ringförmiges Gehäuse 6 auf, an dessen Innenumfang, nämlich an den beiden axialen Enden des Gehäuses, die Stützringe 4 und 5 abgestützt und mit entsprechenden Sicherungsringen fixiert sind.

Die Fig. 1 zeigt ebenfalls, dass die hydraulische Lagerbuchse 1 zwei in Umfangsrichtung zwischen dem ringförmigen Gummikörper und dem ringförmigen Gehäuse ausgebildete, jeweils über Teilbereiche des Umfangs sich erstreckende und mit einer Hydraulikflüssigkeit befüllbare Kammern 7 und 8 aufweist, die über einen hier als Gummischlauch 11 ausgebildeten Ausgleichs- und Drosselkanal 9 miteinander verbunden sind.

Die innere Buchse 2 weist dabei zur Aufnahme diese Gummischlauches 11 einen innenseitig ausgebildeten umlaufenden Hohlraum 10 auf. Der Ausgleichs- und Drosselkanal 9 wird also im Wesentlichen, d.h. bis auf Anschluss- oder Durchführungselemente 13, durch ein im Hohlraum 10 angeordnetes separates, rohrförmiges Leitungselement gebildet, nämlich hier durch einen flexiblen Schlauch 11.

Der Hohlraum 10 entsteht hier durch eine auf der Innenseite der inneren Buchse 2 umlaufende Kavität, welche radial innen durch die Außenoberfläche bzw. Außenwandung des Lagerzapfens 12 begrenzt wird.

Die Fahrtrichtung 14 liegt hier in der oder parallel zur Hochachse der Zeichnung und die "nierenförmig" ausgebildeten Kammern werden im Betrieb der Lagerbuchse durch radiale Kräfte mehr oder weniger verformt, so dass sich die darin befindliche Hydraulikflüssigkeit über den Ausgleichs- und Drosselkanal 9 in die jeweils andere Kammer strömen kann. Die innere Buchse 2 bzw. der Gummikörper 3 weisen dazu hier nicht näher dargestellte Zulaufbohrungen und Durchführungen auf, die den jeweiligen Kanalanfang mit den entsprechenden Kammern verbinden.

### Bezugszeichenliste:

- 1: Hydraulische Lagerbuchse
- 2: Buchse
- 3: Gummikörper
- 4: Stützring
- 5: Stützring
- 6: ringförmiges Gehäuse
- 7: befüllbare Kammer
- 8: befüllbare Kammer
- 9: Ausgleichs- und Drosselkanal
- 10: Hohlraum / Kavität
- 11: Gummischlauch
- 12: Lagerzapfen
- 13: Anschluss- oder Durchführungselement
- 14: Fahrtrichtung

## Patentansprüche

1. Hydraulische Lagerbuchse (1), insbesondere für Schienenfahrwerke, wobei die hydraulische Lagerbuchse folgende Merkmale aufweist:
- eine innere Buchse (2) zur Aufnahme eines Lagerzapfens (12),
- einen ringförmigen Gummikörper (3), der die innere Buchse (2) im Wesentlichen umfasst und über ihren äußeren Umfang mit ihr verbunden ist, vorzugsweise über ihren Umfang anvulkanisiert ist, sowie
- zwei an beiden axialen Enden des Gummikörpers anvulkanisierte ringförmige Stützringe (4, 5), vorzugsweise aus Metall
- ein äußeres ringförmiges Gehäuse (6), an dessen Innenumfang die Stützringe (4, 5) abgestützt sind, vorzugsweise an den beiden axialen Enden des äußeren ringförmigen Gehäuses, sowie
- mindestens zwei in Umfangsrichtung zwischen dem ringförmigen Gummikörper (3) und dem ringförmigen Gehäuse (6) ausgebildete, jeweils über Teilbereiche des Umfangs sich erstreckende und mit einer Hydraulikflüssigkeit befüllbare Kammern (7, 8),
wobei die Kammern (7, 8) über mindestens einen Ausgleichs- und Drosselkanal (9) miteinander verbunden sind, **dadurch gekennzeichnet, dass** die innere Buchse (2) einen vorzugsweise umlaufenden Hohlraum (10) aufweist und der Ausgleichs- und Drosselkanal (9) im Wesentlichen durch mindestens ein in diesem Hohlraum angeordnetes separates, rohrförmiges Leitungselement (11) gebildet ist, vorzugsweise durch mindestens einen in diesem Hohlraum angeordneten flexiblen Schlauch.

2. Hydraulische Lagerbuchse nach Anspruch 1, bei der der Hohlraum (10) durch eine auf der Innenseite der inneren Buchse (2) umlaufende Kavität gebildet wird, welche radial innen durch die Außenoberfläche bzw. Außenwandung des Lagerzapfens (12) begrenzt ist.

3. Hydraulische Lagerbuchse nach Anspruch 1, bei der die innere Buchse (2) aus mindestens zwei koaxial ineinandergefügten hohlzylindrischen Körpern besteht und der Hohlraum durch mindestens eine vorzugsweise umlaufende Ausnehmung mindestens eines der hohlzylindrischen Körper auf der dem jeweils anderen hohlzylindrischen Körper zugewandten Oberfläche ausgebildet ist.

4. Hydraulische Lagerbuchse nach einem der Ansprüche 1 bis 3, bei der der Hohlraum umlaufend ausgebildet ist und das separate, rohrförmiges Leitungselement bzw. der flexible Schlauch (11) schraubenförmig oder spiralförmig innerhalb des Hohlraums verläuft.

5. Hydraulische Lagerbuchse nach einem der Ansprüche 1 bis 4, bei der sowohl die innere Buchse (2) als auch der ringförmige Gummikörper (3) Durchgänge oder Kanäle zur Verbindung der Enden des im Hohlraum befindlichen rohrförmigen Leitungselements bzw. Schlauchs und der jeweiligen befüllbaren Kammer (7, 8) aufweist.

6. Verfahren zur Herstellung einer hydraulischen Lagerbuchse einem der Ansprüche 1 bis 5, **dadurch gekennzeichnet, dass** die innere Buchse (2) mit dem Hohlraum für das rohrförmige Leitungselement bzw. den Schlauch durch ein 3-D-Druckverfahren erzeugt wird.

7. Verwendung einer hydraulischen Lagerbuchse nach einem der Ansprüche 1 bis 5 als Radsatzführungsbuchse innerhalb eines Fahrwerks für ein Schienenfahrzeug.

## Claims

1. Hydraulic bearing bushing (1), in particular for rail vehicle running gears, wherein the hydraulic bearing bushing has the following features:
- an inner bushing (2) for receiving a bearing journal (12),
- an annular rubber body (3), which substantially encloses the inner bushing (2) and is connected thereto via its outer circumference, preferably vulcanized on via its circumference, and
- two annular support rings (4, 5), preferably made of metal, vulcanized on at the two axial ends of the rubber body,
- an outer annular housing (6), against the inner circumference of which the support rings (4, 5) are supported, preferably at the two axial ends of the outer annular housing, and
- at least two chambers (7, 8) that are formed in the circumferential direction between the annular rubber body (3) and the annular housing (6), each extend over partial regions of the circumference and are able to be filled with a hydraulic fluid,
wherein the chambers (7, 8) are connected together via at least one equalizing and throttle channel (9), **characterized in that** the inner bushing (2) has a preferably encircling cavity (10), and the equalizing and throttle channel (9) is formed substantially by at least one separate, tubular line element (11) arranged in this cavity, preferably by at least one flexible hose arranged in this cavity.

2. Hydraulic bearing bushing according to Claim 1, wherein the cavity (10) is formed by an encircling hollow on the inner side of the inner bushing (2), said hollow being delimited radially on the inside by the outer surface or outer wall of the bearing journal (12) .

3. Hydraulic bearing bushing according to Claim 1, wherein the inner bushing (2) consists of at least two hollow cylindrical bodies fitted coaxially one inside the other, and the cavity is formed by at least one preferably encircling recess at least in one of the hollow cylindrical bodies on the surface facing the respectively other hollow cylindrical body.

4. Hydraulic bearing bushing according to one of Claims 1 to 3, wherein the cavity is formed in an encircling manner and the separate, tubular line element or flexible hose (11) extends helically or spirally within the cavity.

5. Hydraulic bearing bushing according to one of Claims 1 to 4, wherein both the inner bushing (2) and the annular rubber body (3) have passages or channels for connecting the ends of the tubular line element or hose located in the cavity and the respective fillable chambers (7, 8).

6. Method for producing a hydraulic bearing bushing according to one of Claims 1 to 5, **characterized in that** the inner bushing (2) having the cavity for the tubular line element or hose is produced by a 3D printing process.

7. Use of a hydraulic bearing bushing according to one of Claims 1 to 5 as a wheelset guide bushing within a running gear for a rail vehicle.

## Revendications

1. Coussinet de palier hydraulique (1), en particulier pour des trains de roulement sur rails, le coussinet de palier hydraulique présentant les particularités suivantes :
- un coussinet intérieur (2) pour recevoir une fusée d'essieu (12),
- un corps en caoutchouc annulaire (3) qui entoure substantiellement le coussinet intérieur (2) et est relié à celui-ci par la circonférence extérieure de celui-ci, de préférence ajouté par vulcanisation sur la circonférence de celui-ci, ainsi que
- deux bagues d'appui (4, 5) annulaires, de préférence en métal, ajoutés par vulcanisation aux deux extrémités axiales du corps en caoutchouc,
- un boîtier annulaire extérieur (6) sur la circonférence intérieure duquel les bagues d'appui (4, 5) prennent appui, de préférence aux deux extrémités axiales du boîtier annulaire extérieur, ainsi que
- au moins deux chambres (7, 8) réalisées dans la direction circonférentielle entre le corps en caoutchouc annulaire (3) et le boîtier annulaire (6), s'étendant respectivement sur des zones partielles de la circonférence, et pouvant être remplies avec un liquide hydraulique,
les chambres (7, 8) étant reliées l'une à l'autre par au moins un canal de compensation et d'étranglement (9),
**caractérisé en ce que** le coussinet intérieur (2) présente une cavité (10) de préférence périphérique, et le canal de compensation et d'étranglement (9) est formé substantiellement par au moins un élément de conduite tubulaire (11), séparé, disposé dans cette cavité, de préférence par au moins un tuyau flexible disposé dans cette cavité.

2. Coussinet de palier hydraulique selon la revendication 1, dans lequel la cavité (10) est formée par une cavité périphérique sur la face intérieure du coussinet intérieur (2), qui est délimitée radialement à l'intérieur par la surface extérieure ou la paroi extérieure de la fusée d'essieu (12).

3. Coussinet de palier hydraulique selon la revendication 1, dans lequel le coussinet intérieur (2) est composé d'au moins deux corps cylindriques creux coaxialement assemblés l'un dans l'autre, et la cavité est réalisée par au moins un creux de préférence périphérique d'au moins l'un des corps cylindriques creux sur la surface tournée vers l'autre corps cylindrique creux respectivement.

4. Coussinet de palier hydraulique selon l'une quelconque des revendications 1 à 3, dans lequel la cavité est réalisée de manière périphérique et l'élément de conduite tubulaire séparé ou le tuyau flexible (11) s'étend en hélice ou en spirale à l'intérieur de la cavité.

5. Coussinet de palier hydraulique selon l'une quelconque des revendications 1 à 4, dans lequel à la fois le coussinet intérieur (2) et le corps de caoutchouc annulaire (3) présentent des passages ou des canaux pour relier les extrémités de l'élément de conduite tubulaire ou du tuyau se trouvant dans la cavité et la chambre (7, 8) pouvant être remplie respective.

6. Procédé de fabrication d'un coussinet de palier hydraulique selon l'une quelconque des revendications 1 à 5, **caractérisé en ce que** le coussinet intérieur (2) doté de la cavité pour l'élément de conduite tubulaire ou le tuyau est produit par un procédé d'impression 3D.

7. Utilisation d'un coussinet de palier selon l'une quelconque des revendications 1 à 5 comme coussinet de guidage d'essieu monté à l'intérieur d'un train de roulement pour un véhicule ferroviaire.
